# EUROPEAN PATENT APPLICATION

(11) **EP 1 900 496 A1**
(43) Date of publication of application: **19.03.2008**
(21) Application number: 06767340.0
(22) Date of filing: 26.06.2006
(51) Int. Cl.: B29C 45/37, G02B 5/10, B29L 11/00

(54) **DIE FOR MOLDING FREE-FORM SURFACE OPTICAL ELEMENT, FREE-FORM SURFACE OPTICAL ELEMENT MOLDED BY USING SUCH DIE, AND FREE-FORM SURFACE MIRROR**

(30) Priority: 07.07.2005 JP 2005198727; 12.07.2005 JP 2005202648
(71) Applicant: Konica Minolta Opto, Inc., Hachioji-shi, Tokyo 192-8505 (JP)
(72) Inventor: IMAOKA, Masayuki, Konica Minolta Opto, Inc., Hachioji-shi, Tokyo 192-8505 (JP); MATSUURA, Atsushi, Konica Minolta Opto, Inc., Hachioji-shi, Tokyo 192-8505 (JP); WATARU, Kohei, Konica Minolta Opto, Inc., Hachioji-shi, Tokyo 192-8505 (JP); OKUMURA, Yoshihiro, Konica Minolta Opto, Inc., Hachioji-shi, Tokyo 192-8505 (JP); ISHIHARA, Jun, Konica Minolta Opto, Inc., Tokyo 192-8505 (JP)
(74) Representative: HOFFMANN EITLE
(86) International application number: PCT/JP2006/312723
(87) International publication number: WO 2007/007540

(57) **Abstract**

The present invention provides an injection mold for forming free-form surface optical element that is possible to produce with high accuracy at low cost a free-form surface optical element that has a stable relation between the free-form surface and the mounting reference surface and is easy to adjust when mounting. The mold comprises a fixed mold and a movable mold for forming a free-form surface (effective area 21) and a rear surface opposite to the free-form surface. The fixed mold and the movable mold are divided by a parting line PL along the peripheral end surface of the free-form surface optical element 14. A mold surface for molding the free-form surface (effective area 21) and a mold surface for molding axial-direction mounting reference surfaces 28a-28c for mounting the free-form surface optical element in a direction substantially perpendicular to the free-form surface are positioned in the mold on the same side with respect to the parting line PL.

## Description

This application is based on Japanese Patent Application Nos. 2005-198727, 2005-202648 the contents in which are incorporated herein by reference.

### BACKGROUND OF THE INVENTION

The present invention relates to an injection mold for forming an free-form surface optical element used for a projection type of image displaying apparatus, i.e., rear-projection television, front-projection television and video projector provided with a reflection type of image forming element such as DMD (digital micro mirror device) or a transparent type of image forming element such as transparent liquid crystal element. Also, the present invention relates to a free-form surface optical element and a free-form surface mirror formed by employing the injection mold.

Recently, there has been a great demand for a projection type of image displaying apparatus having large surface and thin profile. The free-form surface mirror is an indispensable part for attaining large surface and thin profile simultaneously. The free-form surface mirror can not have an optical axis, causing a difficulty of adjustment when mounting it. Thus, it is important to hold a stable relation between the mirror surface of the free-form surface mirror and the mounting reference surface.

Conventionally, various structures for holding the free-form surface mirror have been adopted as shown in patent documents 1-5 below. However, in any of these structures, a reference surface in a mounting direction perpendicular to the mirror surface is provided on a surface (rear surface) opposite to the mirror surface. As the mounting reference surface is formed by different mold from that of the mirror surface, the relation between the mirror surface and the mounting reference surface is unstable due to displacement, inclination and so on of the mold. This makes it very difficult to adjustment when mounting the mirror and increases fabrication cost and also greatly affects the quality of image.

In order to form a free-form surface mirror with high accuracy, the patent document 6 below discloses a mirror comprising a low thickness difference of molding. As described in Fig. 8 of the patent document 6, the mirror has a substantially trapezoidal effective area but has a tetragonal contour. Thus, the contour of the mirror at the upper center portion and lower left and right portions of the reflective surface has a margin with respect to the effective area. A gate is formed in the vicinity of the upper center portion having the margin.

However, the free-form surface mirror has a large mirror volume more than needs, causing a long molding time and a disadvantage on cost. In addition, the large contour of the mirror often causes an interference with other parts and makes it difficult to miniaturizing the projection unit. Especially, in the case applying to an ultra-thin type of rear projection television (for example, thickness of less than 30cm in 60 inches screen), the size of the projection unit largely affects the thickness.
Patent document 1:
   JP Laid-open patent publication No. 5-183847
Patent document 2:
   JP Laid-open patent publication No. 2003-215713
Patent document 3:
   JP Laid-open patent publication No. 2004-309529
Patent document 4:
   JP Laid-open patent publication No. 2005-10568
Patent document 5:
   JP Laid-open patent publication No. 2005-99744
Patent document 6:
   JP Laid-open patent publication No. 11-125864

### SUMMARY OF THE INVENTION

The present invention is made considering the aforementioned disadvantage and has an object to provide an injection mold for forming free-form surface optical element that is possible to produce with high accuracy at low cost a free-form surface optical element that has a stable relation between the free-form surface and the mounting reference surface and is easy to adjust when mounting. Also, the present invention has an object to provide a free-form surface optical element formed by employing the injection mold.

The present invention has an another object to provide a free-form surface mirror that has an excellent formability and is light and compact.

In order to attain the above objects, in the first aspect of the present invention, there is provided an injection mold for forming a free-form surface optical element, the mold comprising:
a fixed mold and a movable mold for forming a free-form surface and a rear surface opposite to the free-form surface, the fixed mold and the movable mold being divided by a parting line along the peripheral end surface of the free-form surface optical element;
wherein a mold surface for molding the free-form surface and a mold surface for molding axial-direction mounting reference surfaces for mounting the free-form surface optical element in a direction substantially perpendicular to the free-form surface are positioned in the mold on the same side with respect to the parting line.

According to the injection mold having above construction, the position accuracy of the free-form surface and the mounting reference surfaces can be set in the same mold, making the relation between the free-form surface and the mounting reference surfaces stable.

It is preferable that a gate for injecting resin is provided on a surface for molding the end surface of the free-form surface optical element. Thus, generation of minute swell of the molding resin in the free-form surface is suppressed, enabling to make the relation between the free-form surface and the mounting reference surfaces stable.

It is preferable that the free-form surface optical element is a mirror.

In the second aspect of the present invention, there is provided a free-form surface optical element, comprising:
a parting line along the peripheral end surface of the free-form surface optical element;
a free-form surface; and
axial-direction mounting reference surfaces for mounting the free-form surface optical element in a direction substantially perpendicular to the free-form surface;
wherein the free-form surface and the axial-direction mounting reference surfaces are positioned on the same side with respect to the parting line.

According to the free-form surface optical element having above construction, the free-form surface and the mounting reference surfaces are formed by the same mold, making the relation between the free-form surface and the mounting reference surfaces stable.

It is preferable that the axial-direction mounting reference surfaces are formed on first, second, and third ear portions which protrude from the end surface of the free-form surface optical element.

It is also preferable that the axial-direction mounting reference surfaces comprises:
first and second mounting reference surfaces for mounting the element in a first direction along the free-form surface, the first and second mounting reference surfaces being formed on the first and second ear portions; and
a third mounting reference surface for mounting the element in a second direction along the free-form surface and perpendicular to the first direction.

In this case, it is preferable that an intersection of a line connecting the first and second mounting reference surfaces and a line extending from the third mounting reference line is situated in the vicinity of the center of the free-form surface optical element. Thus, compliant contraction of the molding resin when molding would be possible and engagement of the first to third mounting reference surfaces with the mold when releasing would not be caused. Therefore, the accuracy of the mounting reference surfaces would not be impaired.

In the third aspect of the present invention, there is provided a free-form surface mirror, comprising:
a parting line along the peripheral end surface of the free-form surface mirror;
a free-form mirror surface ; and
axial-direction mounting reference surfaces for mounting the free-form surface mirror in a direction substantially perpendicular to the free-form mirror surface;
wherein the free-form mirror surface and the axial-direction mounting reference surfaces are positioned on the same side with respect to the parting line.

It is preferable that the mirror surface of the free-form surface mirror has an effective area of more than 1800 mm² and the contour of the mirror is formed along the periphery of the effective area. It is also preferable that the corner portions of the outline are formed to have a radius of curvature larger than the thickness of the corner portions.

According to the construction above, as the contour of the mirror is formed along the periphery of the effective area, the outline is not enlarged more than needs and has no dead area. Also, as the corner portions of the outline are formed to have a radius of curvature larger than the thickness of the corner portions, the molding resin has a good melt flow rate and an excellent formability.

It is preferable that the corner portions satisfy the relation of 1.5t≤R≤6t, where n is a thickness of the corner portion and R is a radius of curvature of the corner portion.

It is preferable that the free-form mirror surface has an effective area and a peripheral area outside the effective area, and
wherein the peripheral area comprises a free-form surface. Thus, the molding resin in a portion from the effective area to the peripheral portion has a good melt flow rate and an excellent formability.

It is preferable that a flat surface portion is formed at a part of the peripheral area and an ear portion is formed at a part of the flat surface portion, and wherein the flat surface portion and the surface on the mirror surface side of the ear portion are smoothly connected with each other. In this case, a transition portion is preferably provided between the peripheral area and the flat surface portion, and wherein the transition portion comprises a flat surface.

It is preferable that an ear portion is formed at a part of the peripheral area, and wherein a surface on the mirror surface side of the ear portion comprises a free-form surface connecting with the peripheral area.

It is preferable that an ear portion is formed at a part of the peripheral area, and wherein a surface on the mirror surface side of the ear portion comprises a flat surface.

It is also preferable that the rear surface of the free-form mirror surface is formed by a free-form surface that is substantially complementary with respect to the free-form surface of the effective area.

Another characteristics are as follows.
(1) A pair of ear portions is disposed at the symmetrical positions of the peripheral area outside the effective area. The lower end surfaces of the pair of ear portions are defined as vertical-direction mounting references of the free-form surface mirror. The mounting references are positioned at a position in a range between a centroid of the effective area and a position that is one half of the distance between the centroid and the upper edge of the effective area. Thus, the thermal expansion at the portion above the vertical-direction mounting reference surfaces can be suppressed, reducing the distortion of the projected image on the screen.
(2) An ear portion is disposed at the lower end position of the peripheral area outside the effective area. The side end surface of the ear portion is defined as a horizontal-direction mounting reference of the free-form surface mirror. The mounting reference is positioned by the centerline of the mirror surface. Thus, it is possible to make the left and right thermal expansion of the free-form surface mirror in the both sides of the horizontal-direction mounting reference substantially same, reducing the distortion of the projected image due to the difference of the left and right thermal deformation of the free-form surface mirror.
(3) An ear portion is disposed at the lower end position of the peripheral area outside the effective area. The ear portion is provided with a gate when forming the free-form surface mirror. Thus, it is not necessary to hold the upper end of the free-form surface mirror and it is possible to make the upper side free end. Therefore, when the free-form surface mirror is incorporated in the projection type of image displaying apparatus in a state that the upper end is leaned rearward, the thickness of the apparatus would not be enlarged.
   Also, as the gate is provided on the ear portion positioned at the lower end of the free-form surface mirror, influences such as minute swell of the flowing resin on the mirror surface is less, enabling to form the mirror with high accuracy.

According to the present invention, as the free-form surface and the mounting reference surfaces are positioned in the mold on the same side with respect to the parting line, the position accuracy of the free-form surface and the mounting reference surfaces can be set in the same mold, making the relation between the free-form surface and the mounting reference surfaces stable in spite of displacement, inclination and so on of the mold. Therefore, it is easy to adjust when mounting and it is possible to produce with high accuracy at low cost a free-form surface optical element.

In addition, according to the present invention, as the contour of the mirror is formed along the periphery of the effective area, the outline is not enlarged more than needs and has no dead area. Also, as the corner portions of the outline are formed to have a radius of curvature larger than the thickness of the corner portions, the molding resin has a good melt flow rate and an excellent formability.

### BRIEF DESCRIPTION OF THE DRAWINGS

Further objects and advantages of the present invention will become clear from the following description taken in conjunction with the preferred embodiments thereof with reference to the accompanying drawings, in which:
Fig. 1 is a sectional view of a rear-projection television as an embodiment of a projection type of image displaying apparatus having a free-form surface mirror according to the present invention;
Fig. 2 is a fragmental perspective view of a projection optical system unit of the rear-projection television of Fig. 1;
Figs. 3A, 3B and 3C are a front view, a right side view and a bottom view of the free-form surface mirror, respectively;
Fig, 4 is a sectional view along IV-IV line of Fig. 3A;
Fig. 5 is a sectional view of a part of injection mold;
Fig. 6 is a sectional view showing a gate position of the injection mold;
Fig. 7 is a front view showing a relation between the reference surface and the contraction direction of the free-form surface mirror;
Fig. 8 is a front view and a bottom view of conventional mirror having boss pins as mounting references;
Fig 9A is a front view of a part of an another embodiment of a free-form surface mirror, Fig. 9B is a front view of a part of a still another embodiment of a free-form surface mirror;
Fig. 10A is a front view of a still another embodiment of a free-form surface mirror, Fig. 10B is a bottom view thereof;
Fig. 11A is a sectional view along XI-XI line of Fig. 10A before forming a transition portion, Fig, 11B is a sectional view along XI-XI line of Fig. 10A after forming the transition portion;
Fig. 12 is a fragmental perspective view of a holding member of the free-form surface mirror;
Fig. 13 is a side view of the holding member of the free-form surface mirror;
Fig. 14 is a rear view of the holding member with the free-form surface mirror held;

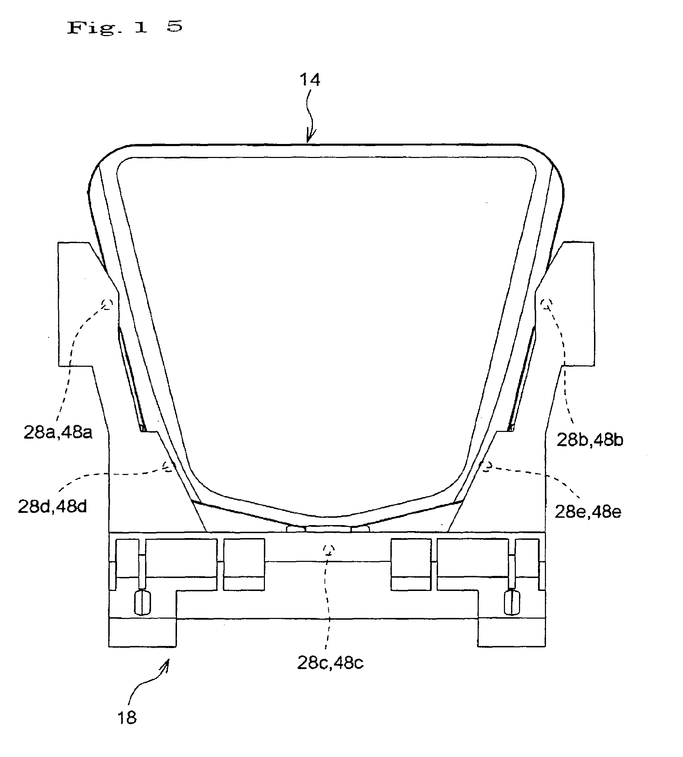

Fig. 15 is a front view of the holding member with the free-form surface mirror held;
Fig. 16A is a sectional view along XVI-XVI line of Fig. 14, Fig. 16B is an enlarged view of Fig. 16A;
Fig. 17A is a schematic enlarged sectional view of an ear portion showing a force exerted on the ear portion; and
Fig. 18A is a schematic enlarged sectional view of an ear portion of an another embodiment showing a force exerted on the ear portion, Fig. 18B is a schematic enlarged sectional view of an ear portion of a still another embodiment showing a force exerted on the ear portion.

### DETAILED DESCRIPTION OF THE PREFERRED EMBODIMENTS

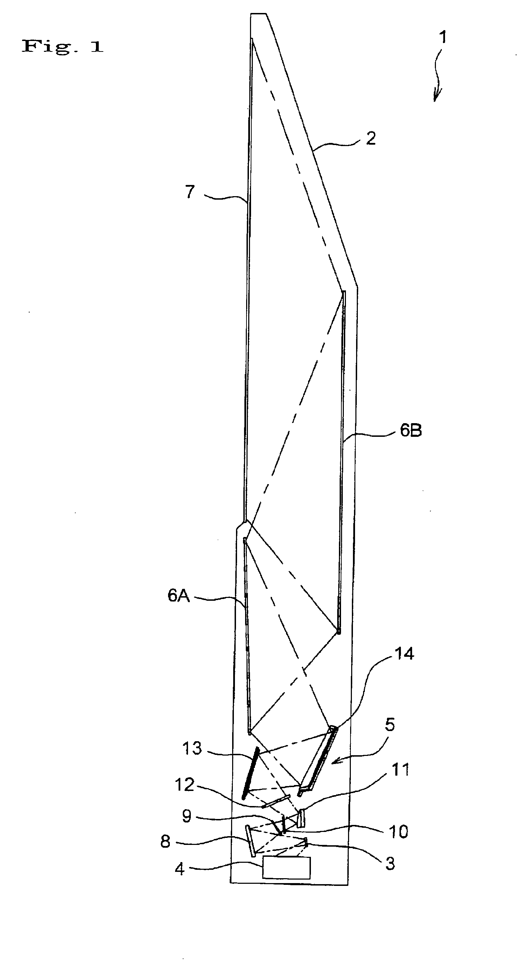

Fig. 1 shows a rear-projection television 1 (rear-pro TV) as an embodiment of a projection type of image displaying apparatus having free-form surface mirror according to the present invention. In a casing 2 of the rear-pro TV 1 are housed a digital micro mirror device (DMD) 3 as one example of the reflection type of image forming element, an illumination optical system 4 for irradiating the DMD 3 with an illumination light and a projection optical system 5 for enlarging and projecting a projection light, i.e., an image light reflected on the DMD 3. On the upper portion of the front surface of the casing 2 is provided a screen 7 on which the image enlarged by the projection optical system 5 is projected through two plane mirrors 6A, 6B.

In the projection optical system 5, in the order from the side of DMD 3, there are disposed a concave mirror 8, a variable aperture mechanism 9, a first aberration correction plate 10, a convex mirror 11, a second aberration correction plate 12, a first free-form surface mirror 13 and a second free-form surface mirror 14 so that the image light from the DMD 3 is delivered in this order to the side of the screen 7.

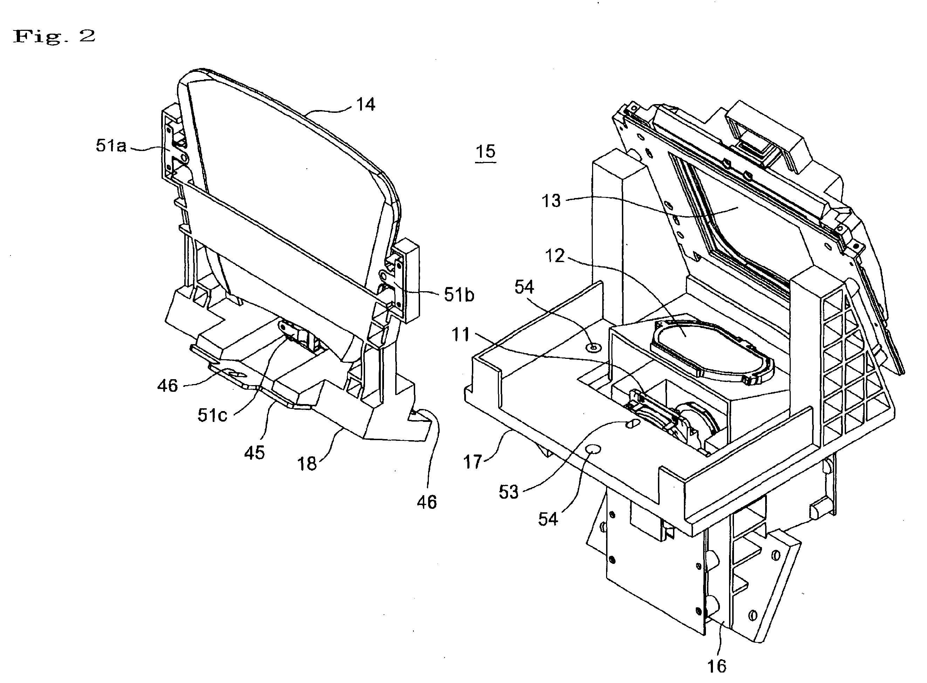

The DMD 3 and the projection optical system 5 are held in a projection optical unit 15 as shown in Fig. 2. The projection optical unit 15 comprises a lower base seat member 16 and an upper base seat member 17. On the lower base seat member 16, the concave mirror 8, the variable aperture mechanism 9, the first aberration correction plate 10, the convex mirror 11 and the second aberration correction plate 12 are held while on the upper base seat member 17, the first free-form surface mirror 13 and the second free-form surface mirror 14 are held. The second free-form surface mirror 14 is held on a holding member 18 attached on the upper base seat member 17.

Next, the second free-form surface mirror (hereinafter, simply referred to as a free-form surface mirror) 14 as an embodiment of the present invention will be described in great detail.

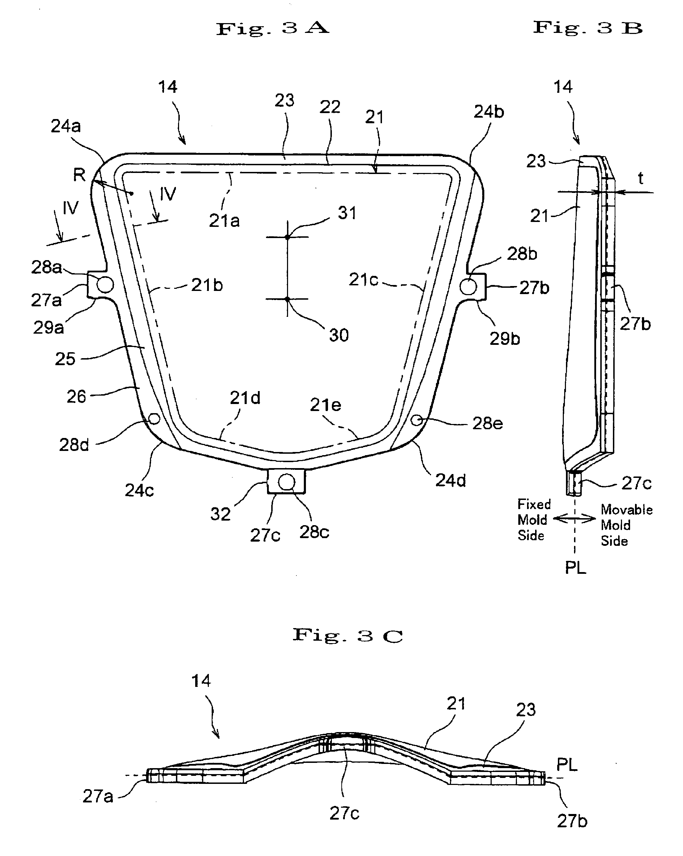

Fig. 3 shows the free-form surface mirror 14. The free-form surface mirror 14 is made of thermoplastic resin such as cycloolefin polymer (for example, ZEONEX®, ZEONOR® (Trade Mark of ZEON Corporation)) having a melt flow rate (MFR) of more than 20, a heat resistance (glass transition point temperature Tg) of more than 130°C, a thermal deformation temperature (Td) of more than 115°C and a water adsorption coefficient (WAC) of less than 0.01% and formed by an injection molding into a curved plate having a uniform thickness in a range of 1mm to 5mm. Use of molding resin having a water adsorption coefficient of less than 0.01% enables to suppress a change of surface profile due to water absorption. After molding, the free-form surface mirror 14 is annealed to remove internal stress. The free-form surface mirror 14 has an effective area of more than 1800 mm², possibly more than 3500 mm² or more than 5000 mm².

As shown in Table 1, a melt flow rate of more than 20 reduces internal stress of the molding, improves transferability of the free-form surface, decreases generation of camber or distortion due to the environment reliability test, and remarkably enhances yield with respect to the appearance in spite of thin configuration. A heat resistance (glass transition point temperature Tg) of more than 130°C and a thermal deformation temperature (Td) of more than 115°C makes adhesion of the reflection coat applied on the reflection surface excellent, prevents the coat from peeling, enables to obtain high reflectance, and decreases generation of camber or distortion. Use of molding material having a water adsorption coefficient (WAC) of less than 0.01% enhances adhesion of the reflection coat and enables to suppress a change of surface profile due to water absorption. Use of thermoplastic resin enables to obtain a free-form surface mirror 14 with extremely high accuracy at high productivity. The injection mold for thermoplastic resin is easy to fabricate and possible to form a large and thin free-form surface mirror with high accuracy. Uniform thickness improves transferability of the free-form surface, makes the formability stable, makes the correction of the free-form surface easy, and also makes the optical performance stable. If the thickness is less than 1mm, generation of camber would be enlarged, the free-form surface would not be stable, and a desired free-form surface would not be obtained. Since the production cycle is decided by square of thickness, if the thickness is more than 5mm, the productivity would become worse. Therefore, the preferable thickness is in the extent of 1mm to 5mm.

**Table 1**

| Characteristic of Material of Free-form Mirror | | | | | | | |
|---|---|---|---|---|---|---|---|
| | | Melt Flow Rate | | Heat Resistance | | Water Adsorption Coefficient | |
| | | High WFR>20 | Low | High Tg>130°C Td>115°C | Low | High | Low WAC<0.01 |
| Forming | Surface Accuracy | ○ | × | - (no difference) | - | - (no difference) | - |
| | Surface Distortion (camber) | ○ | × | - | - | - | - |
| | Appearance | ○ | × flow mark | - | - | - | - |
| Coating | Adhesion | ○ | ○ | ○ | × peeled | × | ○ |
| | Surface Accuracy | ○ | × deformed | ○ | × deformed | ○ | ○ |
| | Reflectance | - | - | ○ | × bloom | × bloom | ○ |
| Environmental Reliability | High Temp. Test 85°C 168 hour | ○ | × | ○ | × | - | - |
| | High Temp. and High Humidity Test 85°C 99% 168 hour | ○ | × | ○ | × | × | ○ |
| | Thermal Shock Test -40°C 10 min. /85°C 10 min. 100 cycle | ○ | × | ○ | × | - | - |

The effective area 21 of the free-form surface mirror 14 is defined by a convex free-form surface and has a substantially pentagonal shape comprising an upper side 21a, left and right sides 21 b, 21c extending downward from both ends of the upper side 21a so as to close with each other, a left lower side 21d extending obliquely downward from the lower end of the left side 21 b to the centerline, and a right lower side 21e extending obliquely downward from the lower end of the right side 21c to the centerline and connecting with the left lower side 21d.

Outside the effective area 21, a surrounding area 22 with a substantially constant width is formed. Further outside the surrounding area 22, a peripheral area 23 is formed. The peripheral area 23 comprises a free-form surface or a surface similar to the free-form surface. The contour of the peripheral area 23 is formed along the periphery of the effective area 21 and has a substantially same pentagonal shape as the effective area 21. The corner portions 24a, 24b, 24c, 24d of the peripheral area 23 has a radius R of curvature larger than the thickness t, preferably a radius R satisfying 1.5t≤R≤6t, further preferably a radius R satisfying 2t≤R≤4t. In this embodiment, the thickness is 5mm, R= 15 in the corner portions 24a, 24b, and R=20 in the corner portion 24c. Thus, the molding resin in the corner portions 24a, 24b, 24c, 24d has a good melt flow rate and an excellent formability. On the edge of the peripheral area 23, no rib is formed in a direction perpendicular to the mirror surface. Such rib worsens the melt flow rate of the resin and engages with the mold when releasing the mold, reducing accuracy of the molded surface. In comparison with one having ribs, the free-form surface mirror 14 of the present embodiment has no rib and therefore has a good melt flow rate of the molding resin and an excellent mold release of the mold, enhancing the surface accuracy of the mirror surface.

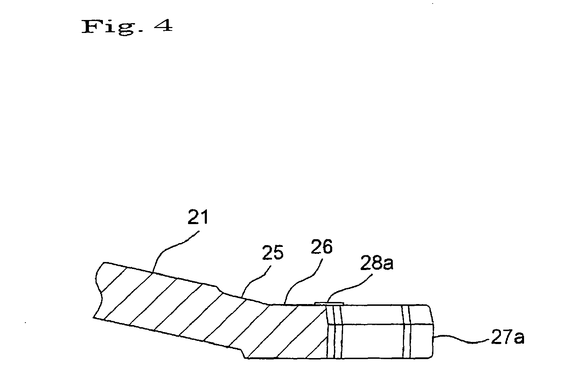

The left and right sides of the peripheral area 23 are formed wider than the upper side and the left and right lower sides of the peripheral area 23 and each comprises an inside free-form surface portion 25 and an outside flat surface portion 26. The upper end of each free-form surface portion 25 connects with the free-form surface of the upper side of the peripheral area 23 while the lower end of each free-form surface portion 25 connects with the left and right sides of the peripheral area 23 respectively. The free-form surface portion 25 and the flat surface portion 26, as shown in Fig. 4, connect with each other via a smooth surface.

On the edges of the flat surface portions 26 of the left and right sides of the peripheral area 23, a first ear portion 27a and a second ear portion 27b having rectangular shape and protruding in left and right directions respectively are formed. The front surfaces of the first ear portion 27a and the second ear portion 27b are flat surfaces flushed with the flat surface portion 26 described above and constitute first and second axial-direction mounting reference surfaces 28a, 28b of the free-form surface mirror 14. The lower surfaces of the first ear portion 27a and the second ear portion 27b constitute first and second vertical-direction mounting reference surfaces 29a, 29b of the free-form surface mirror 14. The first and second vertical-direction mounting reference surfaces 29a, 29b are positioned in a range between a centroid 30 of the effective area 21 and a position 31 that is one half of the distance between the centroid 30 and the upper edge of the effective area 21, preferably positioned in the centroid 30. The reason for positioning the first and second vertical-direction mounting surfaces 29a, 29b by the upper portion of the effective area 21 is as follow. As the upper side portion of the free-form surface mirror 14 has larger angles of incidence and reflection and larger sensitivity than that of the lower side portion, a slight displacement of the free-form surface due to thermal expansion during operation generates a distortion of the projected image on the screen 7. In the present embodiment, as the first and second vertical-direction mounting reference surfaces 29a, 29b are positioned above the centroid 30 of the effective area 21, the thermal expansion at the portion above the first and second vertical-direction mounting reference surfaces 29a, 29b is suppressed, reducing the distortion of the projected image on the screen 7.

On the lower edge of the left and right lower sides of the peripheral area 23, a third ear portion 27c having rectangular shape and protruding in a lower direction is formed. The front surface of the third ear portion 27c is a flat surface and constitutes a third axial-direction mounting reference surface 28c of the free-form surface mirror 14. The left side end surface of the third ear portion 27c constitutes a horizontal-direction mounting reference surface 32 of the free-form surface mirror 14. Small width of the third ear portion 27c allows the horizontal-direction mounting reference surface 32 to approach the centerline as close as possible and makes the left and right thermal expansion substantially same, reducing the distortion of the projected image on the screen 7. Preferably, the third ear portion 27c is positioned on the centerline and is formed with a width of more than 5 mm and less than 15 mm. The right side end surface or the lower end surface of the third ear portion 27c was a position where a gate of molding resin was provided when injection molding. On the flat surface portions 26 of the left and right lower corner portions 24c, 24d, adjustment surfaces 28d, 28e are provided.

The rear surface of the free-form surface mirror 14 is formed by a concave free-form surface that is complementary with respect to the surface of the effective area 21 on front surface.

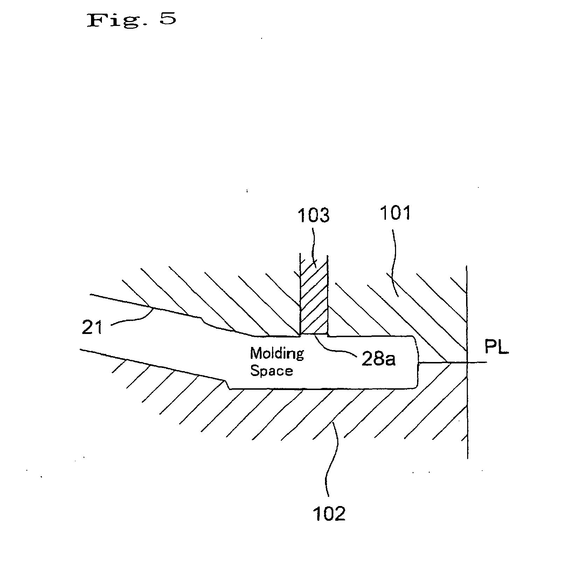

The free-form surface mirror 14 having above construction is formed by injection molding. As shown in Fig. 5, the injection mold for the free-form surface mirror 14 comprises a fixed mold 101 on mirror surface (effective area 21) side and a movable mold 102 on the back side with respect to a parting line PL along the peripheral end surface of the free-form surface mirror 14. Thus, both of the mirror surface (effective area 21) and the axial-direction mounting reference surfaces 28a, 28b, 28c for mounting the mirror in a direction substantially perpendicular to the mirror surface are on the fixed mold 101. Of course, the mirror surface (effective area 21) side may be on the movable mold while the rear surface side may be on the fixed mold. Thus, the positions of the mirror surface (effective area 21) and the axial-direction mounting reference surfaces 28a, 28b, 28c can be set with high accuracy, enabling to adjust and stabilize an eccentric accuracy of the mirror surface (effective area 21) with respect to the axial-direction mounting reference surfaces 28a, 28b, 28c.

Further, as shown in Fig. 5, in a part of the fixed mold 101 corresponding to the axial-direction mounting reference surface 28a, an insert 103 is incorporated so that the position of the insert 103 with respect to the molding surface of the fixed mold 101 can be adjusted to change the height of the axial-direction mounting reference surface 28a.

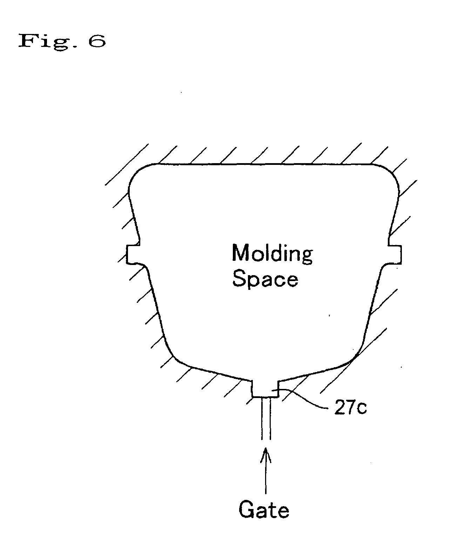

Considering the uniform flow of the molding resin, the gate of the injection mold can be positioned at the center of the rear surface opposite to the mirror surface. If multi-point gate using pinpoint gates and so on is adopted, low pressure resin injection would be possible, enhancing the transferablility (PV value of configuration error). However, when such gate is applied to the free-form surface mirror 14, minute swell of the flowing resin would be caused. It is very difficult to remove such swell by correction, causing large optical problems. Therefore, in the present embodiment, as shown in Fig. 6, the gate is set on the lower surface of the third ear portion 27c.

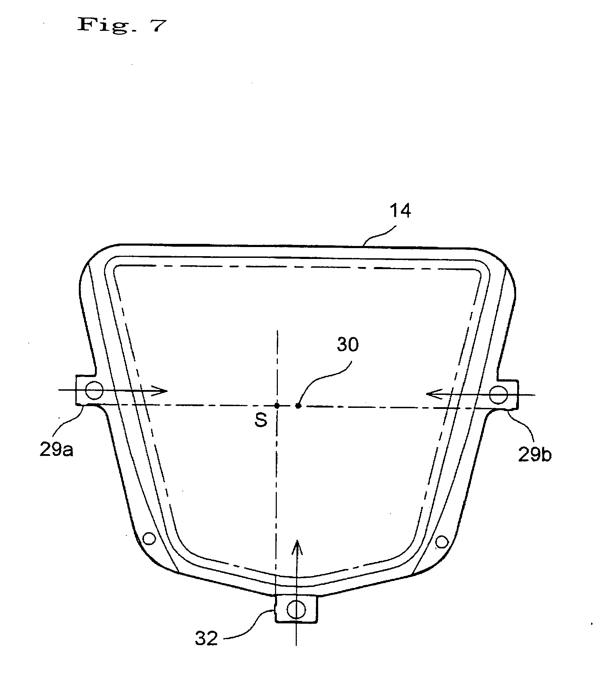

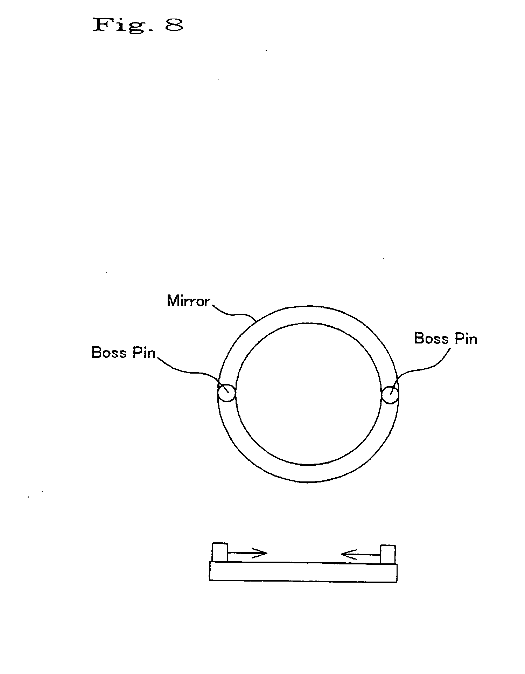

As shown in Fig. 7, an intersection S of a line connecting the first and second vertical-direction mounting reference surfaces 29a, 29b with a line extended from the horizontal direction mounting reference surface 32 is situated in the vicinity of the center (centroid 30 in this embodiment) of the formed free-form surface mirror 14. In the conventional structure, as shown in Fig. 8, boss pins as mounting reference have been provided. So, when the molds are opened to release and the molded piece is rapidly cooled and contracted, the boss pins engage with the mold, making the releasing property worse, causing distortion of the mirror surface, and detracting the accuracy as the mounting reference. On the other hand, in the present embodiment, since the first to third ear portions 27a-27c have no engagement in the contraction direction of the molded piece indicated by arrow in Fig. 7, compliant contraction would be possible. Therefore, in the present embodiment, the releasing property is better and the accuracy of the mounting reference surfaces 29a, 29b, 32 is not impaired. Further, as the mounting reference surfaces 29a, 29b, 32 are formed by the same mold as the mirror surface, the position of them with respect to the mirror surface can be set with high accuracy.

As described above, the free-form surface mirror 14 is formed with the outline along the contour of the effective area 21. Thus, in spite that the effective area 21 is large size having an area of more than 1800 mm², the outline is not enlarged more than needs and has no dead area. In particular, in the case of the mirror having the effective area of substantially triangle or substantially trapezoid (the substantially trapezoid includes substantially pentagon in the present embodiment), it is effective to form the outline along the contour of the effective area. Further, as the corner portions 24a - 24c of the outline is formed to have radius of curvature larger than the thickness, the molding resin has a good melt flow rate and an excellent formability.

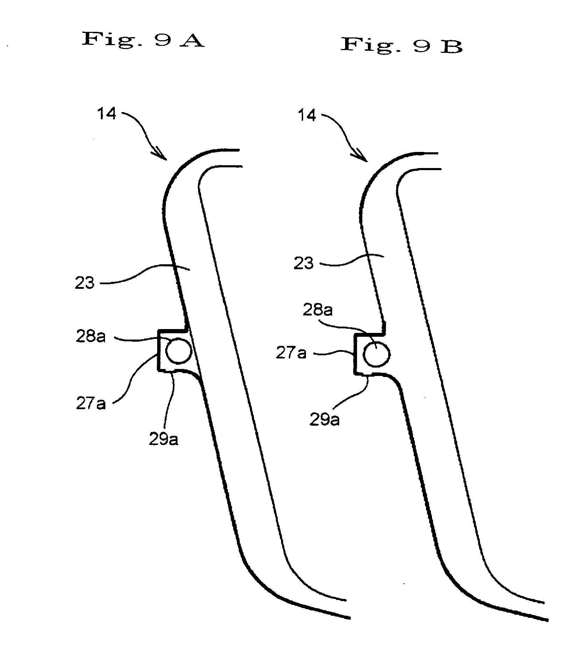

Fig. 9 shows an another embodiment of the free-form surface mirror 14. In Fig. 9A, the left and right side peripheral area 23 is not provided with a flat surface portion 26 as in the embodiment shown in Fig. 2 but comprises a free-form surface or a surface similar to the free-form surface all over the width. In Fig. 9B, the right side peripheral areas 23 of Fig. 9A are connected to the ear portion 27a. A part of the front surface of the ear portion 27a is formed with a flat surface to define the axial-direction reference surface 28a. Thus, the right side peripheral areas 23 has no flat surface portion, enhancing the melt flow rate of the molding resin and making the formability excellent.

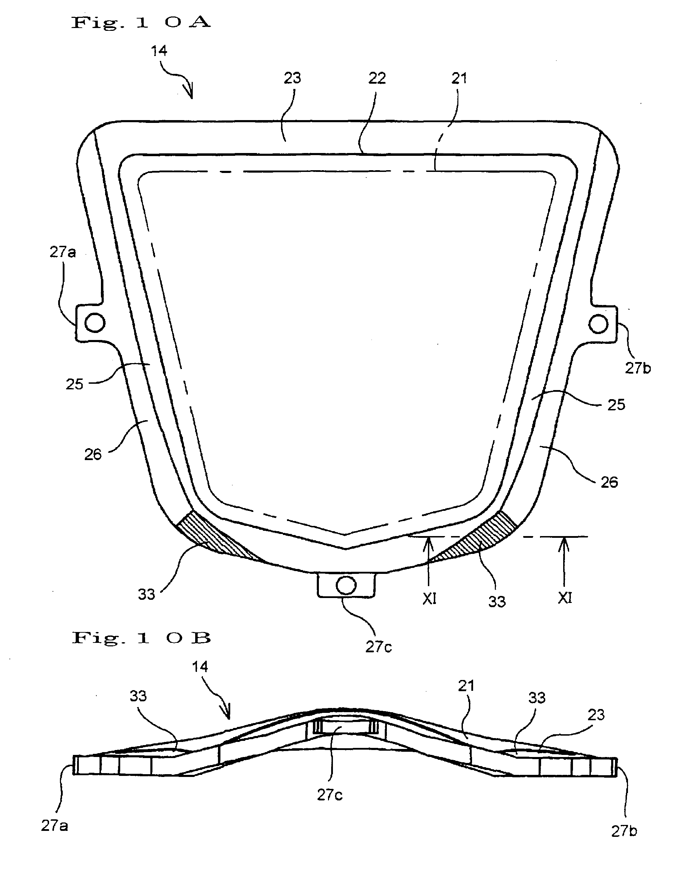

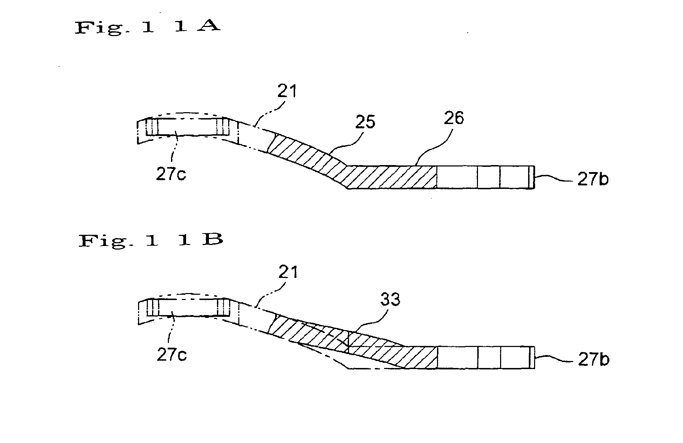

Fig. 10 shows a still another embodiment of the free-form surface mirror 14. In the free-form surface mirror 14, transition portions 33 having substantially triangular shape shown by hatching are provided between the lower end areas of the free-form surface portions 25 and the lower end areas of the flat surface portions 26 in the left and right side peripheral areas 23 of the free-form surface mirror 14 as shown in Fig. 3. The transition portions 33 comprise flat surfaces. In the free-form mirror 14, as shown in Fig. 11A, the free-form surface portion 25 and the flat surface portion 26 intersect at a sharp angle between the lower end area of the free-form surface portion 25 and the lower end area of the flat surface portion 26. In this portion, providing the transition portion 33 comprising a flat surface avoids concentration of stress and prevents generation of camber.

Subsequently, a structure for mounting the free-form surface mirror 14 having above construction on the holding member 18 will be described.

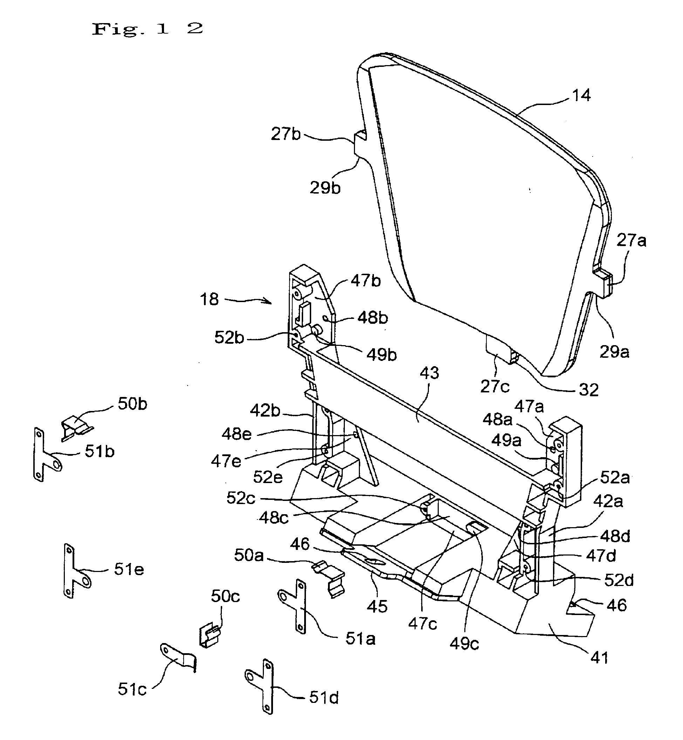

In Fig. 12, the holding member 18 of the free-form surface mirror 14 is made of synthetic resin and comprises a base portion 41, left and right arm portions 42a, 42b extending from the both ends of the base portion 41 obliquely rearward, and a reinforcing portion 43 connecting the midsections of the rear surfaces of the left and right arm portions 42a, 42b.

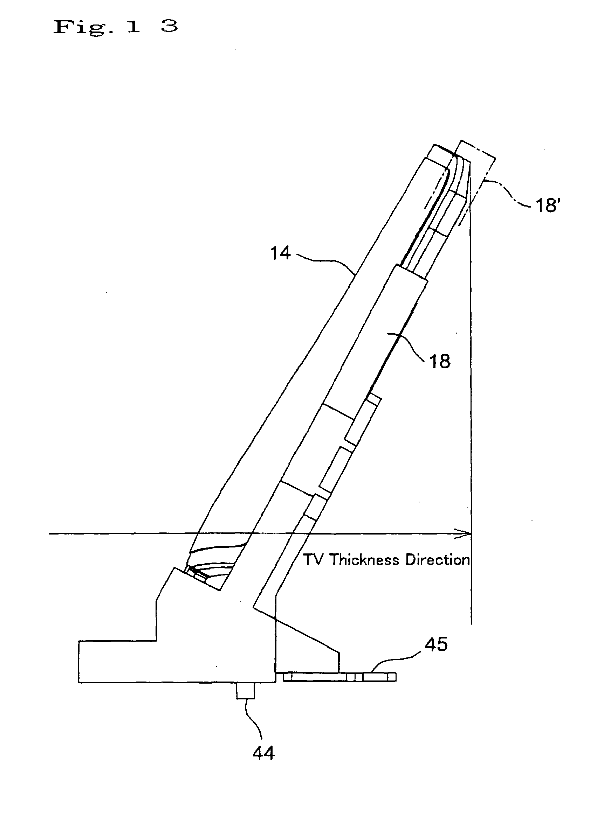

On the bottom surface of the base portion 41, as shown in Fig. 13, a protrusion 44 is formed at the center and an attachment plate 45 of metal is attached at the rear portion. At the attachment plate 45 and the both end portions of base portion 41, total three attachment holes 46 are formed. On the upper surface of the base portion 41, a third recess portion 47c in which the third ear portion 27c of the free-form surface mirror 14 is to be disposed. The front side wall of the third recess portion 47c is defined as a third contact surface 48c with which the third axial-direction mounting reference surface 28c of the third ear portion 27c comes into contact. The third contact surface 48c comprises a convex surface (for example, spherical surface). On the third recess portion 47c, a third positioning protrusion 49c is formed. A third press spring 50c is fixed so as to oppose the third positioning projection 49c. In the vicinity of the third press spring 50c, a third fixing attachment 51c for pressing and fixing the third ear portion 27c on the third contact surface 48c is attached to a screw hole 52c.

On the upper portion of the left and right arm portions 42a, 42b, first and second recess portions 47a, 47b in which the first and second ear portions 27a, 27b of the free-form surface mirror 14 are to be disposed. The front side walls of the first and second recess portions 47a, 47b are defined as first and second contact surfaces 48a, 48b with which the fist and second axial-direction mounting reference surfaces 28a, 28b of the first and second ear portions 27a, 27b come into contact. The first and second contact surfaces 48a, 48b also comprise a convex surface (for example, spherical surface) respectively. On the first and second recess portions 47a, 47b, first and second positioning protrusions 49a, 49b are formed. First and second press springs 50a, 50b are fixed so as to oppose the first and second positioning projections 49a, 49b. In the vicinity of the first and second press springs 50a, 50b, first and second fixing attachments 51a, 51b for pressing and fixing the first and second ear portions 27a, 27b on the fist and second contact surfaces 48a, 48b are attached to screw holes 52a, 52b (two positions respectively).

On the lower portion of the left and right arm portions 42a, 42b, fourth and fifth recess portions 47d, 47e in which the left and right lower corner portions 24c, 24d of the free-form surface mirror 14 are to be disposed. The front side walls of the fourth and fifth recess portions 47d, 47e are defined as first and second seat surfaces 48d, 48e with which the fist and second adjustment surfaces 28d, 28e of the left and right lower corner portions 24c, 24d come into contact. Fourth and fifth fixing attachments 51d, 51e for pressing and fixing the first and second adjustment surfaces 28d, 28e on the fist and second seat surfaces 48d, 48e are attached to screw holes 52d, 52e.

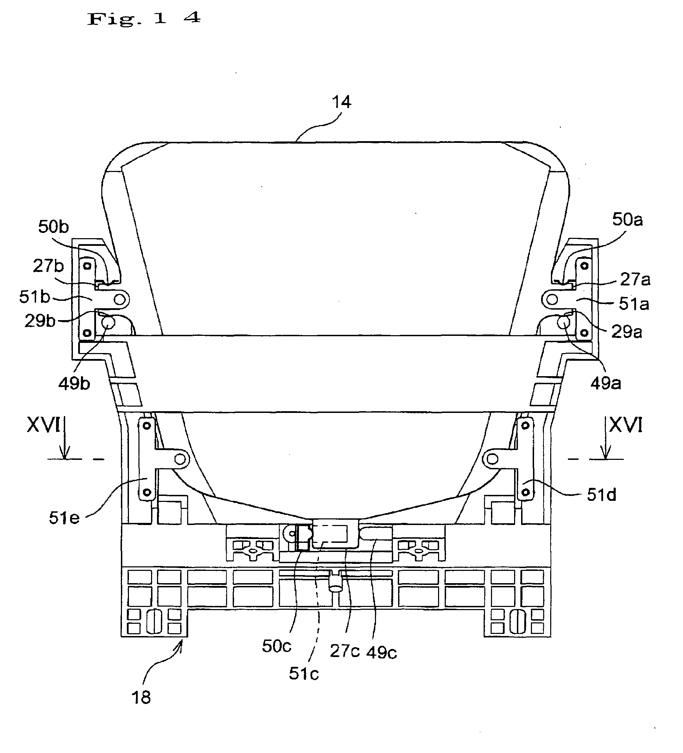

In order to attach the free-form surface mirror to the holding member 18, the free-form surface mirror 14 with the upper end leaned rearward is inserted in the holding member 18 from above. The third ear portion 27c is inserted between the third press spring 50c and the third positioning protrusion 49c of the third recess portion 47c. Subsequently, the free-form surface mirror 14 is pressed forward to insert the first and second ear portions 27a, 27b between the first and second press springs 50a, 50b and the first and second positioning protrusions 49a, 49b of the first and second recess portions 47a, 47b. Thus, as shown in Figs. 13, 14, the first and second vertical-direction mounting reference surface 29a, 29b of the first and second ear portions 27a, 27b are pressed at two positions against the first and second positioning protrusion 49a, 49b by the first and second press springs 50a, 50b, causing the free-form surface mirror 14 to be positioned in the vertical direction. Also, the horizontal-direction mounting reference surface 32 is pressed at one position against the third positioning protrusion 49c by the third press spring 50c, causing the free-form surface mirror 14 to be positioned in the horizontal direction.

Thus, in the present embodiment, the first to third ear portions 27a-27c are biased at three positions to the first to third positioning protrusions 49a-49c by the first to third press springs 50a-50c to position the free-form surface mirror 14. That is to say, the vertical direction is restrained by the first and second vertical-direction mounting reference surfaces 29a, 29b of the first and second ear portions 27a, 27b while the horizontal direction is restrained by the horizontal-direction mounting reference surface 32 of the third ear potion 27c. Therefore, in comparison with the conventional construction employing the boss pins and holes, in the present embodiment, the reference surface may be a flat surface, enhancing the releasability when molding and suppressing deformation of the reference surfaces.

Then, the first to fifth fixing attachments 51a-51e are attached on the predetermined portions so that the axial-direction reference surfaces 28a-28c of the first to third ear portions 27a-27c are pressed against the first to third contact surfaces 48a-48c and the fourth and fifth axial-direction mounting reference surfaces 28d, 28e of the left and right lower corner portions 24c, 24d are pressed against the fourth and fifth contact surfaces 48d, 48e. Thus, the axial-direction mounting reference surfaces 28a-28c come into point contact with the first to third contact surfaces 48a-48c so that the free-form surface mirror 14 can be positioned in the axial direction with high accuracy and easily attached.

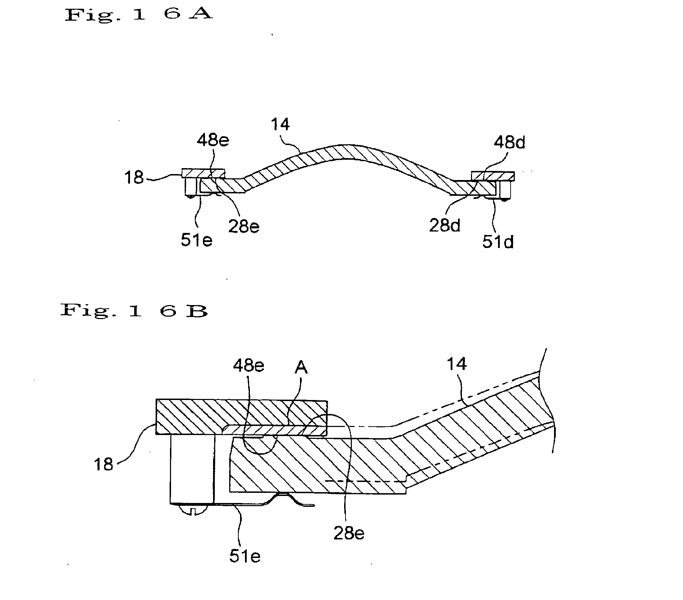

After attaching the free-form surface mirror 14 on the holding member 18 as described above, if necessary, the height of the seat surfaces 48d, 48e of the holding member 18 or the adjustment surfaces 28d, 28e of the free-form surface mirror 14 are adjusted as shown in Fig. 16A. Concretely, if the height needs to be lowered, as shown in Fig. 16B, the seat surfaces 48d, 48e of the holding member 18 are properly ground and trimmed off to correct camber, distortion, eccentricity and so on of the mirror surface while watching the optical performance of the free-form surface mirror 14. In stead of grinding the seat surfaces 48d, 48e of the holding member 18, the adjustment surfaces 28d, 28e of the free-form surface mirror 14 may be ground. By contraries, if the height needs to be heightened, spacers may be inserted and fixed between them.

The free-form surface mirror 14 held on the holding member as described above can be mounted on the upper base seat member 17 by inserting the protrusion 44 of the base portion 41 into a long hole 53 of the upper base seat member 17, aligning the three attachment holes 46 with corresponding attachment holes 54 of the upper base seat member 17 and screwing attaching screws unshown.

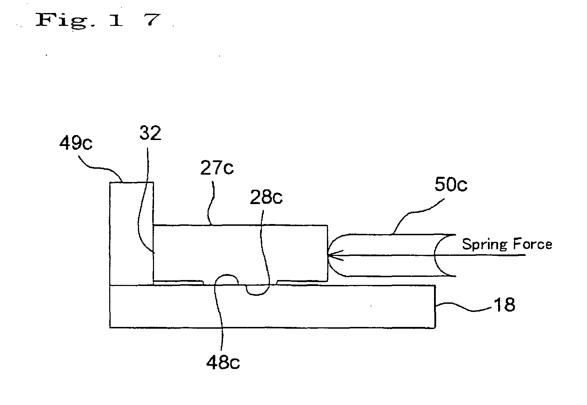

As shown in Fig. 17, the mounting reference surfaces 29a, 29b, 32 (only 32 is shown in the figure) of the first to third ear portions 27a-27b (only 27c is shown in the figure) and the opposite surfaces against which the first and second press springs 50a-50c (only 50c is shown in the figure) are pressed are preferably parallel to each other. In this case, when the free-form surface mirror 14 is mounted on the holding member 18, no moment will be caused due to the spring force of the press springs 50a-50c, preventing the free-form surface mirror 14 from being lifted and enabling to minimize the distortion.

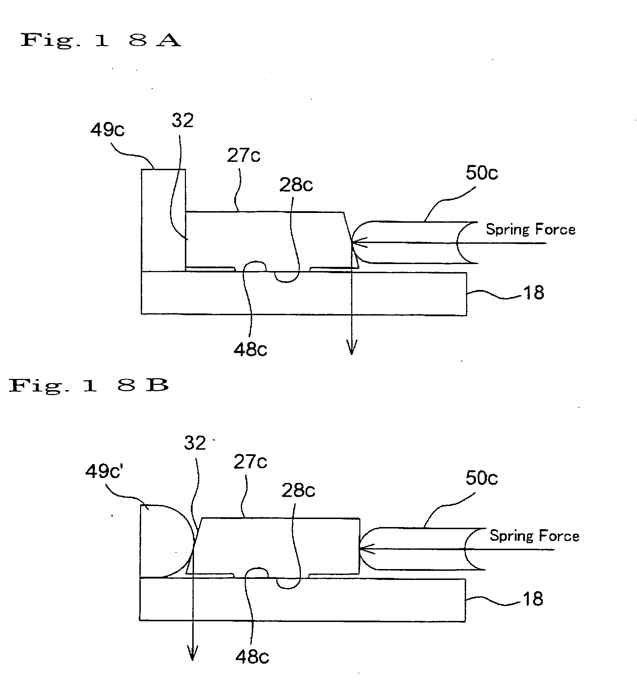

Further, as shown in Figs. 18A, 18B, the mounting reference surfaces 29a, 29b, 32 (only 32 is shown in the figure) of the first to third ear portions 27a-27b (only 27c is shown in the figure) and the opposite surfaces against which the first and second press springs 50a-50c (only 50c is shown in the figure) are pressed are not limited to the parallel surfaces but one (right side end surface in Fig. 18A, left side surface in Fig. 16B) may be inclined with respect to the other so that when mounting a moment will be caused in a direction that the first to third ear portions 27a-27b are pressed against the contact surfaces 48a-48c of the holding member 18. Thus, the free-form surface mirror 14 are prevented from being lifted, enabling to stably attach the mirror 14 and minimize the distortion.

The free-form surface mirror 14 fixed on the upper base seat member 17 is in a state that the upper end is leaned rearward as shown in Fig. 13. If the upper side of the holding member 18 protrudes above the upper end of the free-form surface mirror 14 as shown in a two-dots chain line 18', the dimension in a TV thickness direction would be enlarged by protrusion of the holding member. In the present embodiment, the third ear portion 27c having the third axial-direction mounting reference surface 28a and the horizontal direction mounting reference surface 32 is provided not on the upper side but on the lower side of the free-form surface mirror 14. Also, on the third ear portion 27c positioned at lower side, the gate position is provided and the upper side is made quite free end. The upper side of the holding member 18 is positioned below the upper side of the free-form surface mirror 14 so that the upper end of the free-form surface mirror 14 can decide the dimension in the TV thickness direction, enabling to make the rear-pro TV 1 thin.

The present invention is not limited to the mirror having a free-form surface mirror but may be applicable to a mirror having a reflecting surface of rotational symmetry shape but having no rotational symmetry axis at the center of the mirror surface, or a mirror having no rotational symmetry axis within the contour of the mirror. The present invention is also limited to the mirror but applicable to a lens.

Although the present invention has been fully described by way of the examples with reference to the accompanying drawing, it is to be noted that various changes and modifications will be apparent to those skilled in the art. Therefore, unless such changes and modifications otherwise depart from the spirit and scope of the present invention, they should be construed as being included therein.

## Claims

1. An injection mold for forming a free-form surface optical element, the mold comprising:
a fixed mold and a movable mold for forming a free-form surface and a rear surface opposite to the free-form surface, the fixed mold and the movable mold being divided by a parting line along the peripheral end surface of the free-form surface optical element;
wherein a mold surface for molding the free-form surface and a mold surface for molding axial-direction mounting reference surfaces for mounting the free-form surface optical element in a direction substantially perpendicular to the free-form surface are positioned in the mold on the same side with respect to the parting line.

2. The injection mold as in claim 1, wherein a gate for injecting resin is provided on a surface for molding the end surface of the free-form surface optical element.

3. The injection mold as in claim 1, wherein the free-form surface optical element is a mirror.

4. A free-form surface optical element, comprising:
a parting line along the peripheral end surface of the free-form surface optical element;
a free-form surface; and
axial-direction mounting reference surfaces for mounting the free-form surface optical element in a direction substantially perpendicular to the free-form surface;
wherein the free-form surface and the axial-direction mounting reference surfaces are positioned on the same side with respect to the parting line.

5. The free-form surface optical element as in claim 4, wherein the axial-direction mounting reference surfaces are formed on first, second, and third ear portions which protrude from the end surface of the free-form surface optical element.

6. The free-form surface optical element as in claim 5, wherein the axial-direction mounting reference surfaces comprises:
first and second mounting reference surfaces for mounting the element in a first direction along the free-form surface, the first and second mounting reference surfaces being formed on the first and second ear portions; and
a third mounting reference surface for mounting the element in a second direction along the free-form surface and perpendicular to the first direction.

7. The free-form surface optical element as in claim 6, wherein an intersection of a line connecting the first and second mounting reference surfaces and a line extending from the third mounting reference line is situated in the vicinity of the center of the free-form surface optical element.

8. A free-form surface mirror, comprising:
a parting line along the peripheral end surface of the free-form surface mirror;
a free-form mirror surface ; and
axial-direction mounting reference surfaces for mounting the free-form surface mirror in a direction substantially perpendicular to the free-form mirror surface;
wherein the free-form mirror surface and the axial-direction mounting reference surfaces are positioned on the same side with respect to the parting line.

9. The free-form surface mirror as in claim 8, wherein the axial-direction mounting reference surfaces are formed on first, second, and third ear portions which protrude from the end surface of the free-form surface mirror.

10. The free-form surface mirror as in claim 9, wherein the axial-direction mounting reference surfaces comprises:
first and second mounting reference surfaces for mounting the element in a first direction along the free-form surface, the first and second mounting reference surfaces being formed on the first and second ear portions; and
a third mounting reference surface for mounting the element in a second direction along the free-form surface and perpendicular to the first direction.

11. The free-form surface mirror as in claim 10, wherein an intersection of a line connecting the first and second mounting reference surfaces and a line extending from the third mounting reference line is situated in the vicinity of the center of the free-form surface mirror.

12. The free-form surface mirror as in claim 8, wherein the mirror surface of the free-form surface mirror has an effective area of more than 1800 mm² and the contour of the mirror is formed along the periphery of the effective area.

13. The free-form surface mirror as in claim 12, wherein the corner portions of the outline are formed to have a radius of curvature larger than the thickness of the corner portions.

14. The free-form surface mirror as in claim 13, wherein the corner portions satisfy the relation of 1.5t≤R≤6t, where n is a thickness of the corner portion and R is a radius of curvature of the corner portion.

15. The free-form surface mirror as in claim 8, wherein the free-form mirror surface has an effective area and a peripheral area outside the effective area, and wherein the peripheral area comprises a free-form surface.

16. The free-form surface mirror as in claim 15, wherein a flat surface portion is formed at a part of the peripheral area and an ear portion is formed at a part of the flat surface portion, and wherein the flat surface portion and the surface on the mirror surface side of the ear portion are smoothly connected with each other.

17. The free-form surface mirror as in claim 16, wherein a transition portion is provided between the peripheral area and the flat surface portion, and wherein the transition portion comprises a flat surface.

18. The free-form surface mirror as in claim 15, wherein an ear portion is formed at a part of the peripheral area, and wherein a surface on the mirror surface side of the ear portion comprises a free-form surface connecting with the peripheral area.

19. The free-form surface mirror as in claim 15, wherein an ear portion is formed at a part of the peripheral area, and wherein a surface on the mirror surface side of the ear portion comprises a flat surface.

20. The free-form surface mirror as in claim 8, wherein the rear surface of the free-form mirror surface is formed by a free-form surface that is substantially complementary with respect to the free-form surface of the effective area.
